# EUROPÄISCHE PATENTSCHRIFT

(11) **EP 1 274 535 B1**
(45) Veröffentlichungstag und Bekanntmachung des Hinweises auf die Patenterteilung: **03.03.2004**
(21) Anmeldenummer: 01940124.9
(22) Anmeldetag: 04.04.2001
(51) Int. Cl.: B23K 31/02, B65G 47/90, B23D 65/00, B65G 57/04, B65G 59/04

(54) **VERFAHREN ZUR VEREINZELUNG VON SÄGEBLATTGRUNDKÖRPERN AUS EINEM MAGAZIN FÜR EINE AUFNAHMEVORRICHTUNG**
METHOD FOR WITHDRAWING SAW BLADE BASE BODIES ONE BY ONE FROM A MAGAZINE AND FEEDING THEM TO A SUPPORTING DEVICE
PROCEDE POUR RETIRER UN PAR UN DES CORPS DE BASE DE LAME DE SCIE D'UN MAGASIN ET LES AMENER A UN DISPOSITIF DE SUPPORT

(30) Priorität: 05.04.2000 DE 10016703
(43) Veröffentlichungstag der Anmeldung: 15.01.2003
(73) Patentinhaber: Gerling Automation GmbH, 71546 Aspach (DE)
(72) Erfinder: GERLING, Holger, 71546 Aspach (DE)
(74) Vertreter: KOHLER SCHMID + PARTNER
(86) Internationale Anmeldenummer: PCT/DE2001/001312
(87) Internationale Veröffentlichungsnummer: WO 2001/076810

(56) Entgegenhaltungen:
- DE-A- 3 717 610
- DE-A- 4 236 053
- DE-A- 4 334 129
- GB-A- 2 272 178
- US-A- 3 411 640
- US-A- 5 735 660

## Beschreibung

Die Erfindung geht aus von einem Verfahren zur Vereinzelung von Sägeblattgrundkörpern aus einem Magazin gemäß dem Oberbegriff des Anspruchs 1.

Ein derartiges Verfahren ist durch die **DE 37 17 610 C2** bekanntgeworden.

Bei dem bekannten Verfahren holt ein Greiferarm Sägeblattgrundkörper aus einem Vorlagemagazin ab und führt immer einen einzelnen Sägeblattgrundkörper der Aufnahmevorrichtung einer Anlötvorrichtung zu.

Die Sägeblattgrundkörper sind bei dem bekannten Verfahren auf einem horizontal angeordneten Dorn gelagert und liegen dicht gestapelt aneinander.

Bei anderen bekannten Vorlagemagazinen ist der Dorn, auf den die Sägeblattgrundkörper aufgesteckt sind, vertikal oder schräg ausgerichtet. In diesen Vorlagemagazinen liegen die Sägeblattgrundkörper ebenfalls dicht aneinander, damit die Bevorratung von Sägeblattgrundkörpern im Vorlagemagazin möglichst groß ist.

Es hat sich nun gezeigt, dass die in den Vorlagemagazinen aneinanderliegenden Sägeblattgrundkörper aufgrund vorliegender Adhäsion teilweise sehr stark aneinander haften, so dass ein Greiferarm nicht immer einen einzelnen Sägeblattgrundkörper aus dem Vorlagemagazin entnehmen kann. Transportiert der Greiferarm mehrere Sägeblattgrundkörper aus dem Vorlagemagazin zur Aufnahmevorrichtung, so führt dies regelmäßig zu Prozeßstörungen, weil beispielsweise beim Transport der nicht unmittelbar vom Greiferarm gehaltene Sägeblattgrundkörper abfällt oder zwei Sägeblattgrundkörper der Aufnahmevorrichtung zugeführt werden, die dort nicht aufgenommen werden können.

Im Stand der Technik wird diesen zwischen den Sägeblattgrundkörpern wirkenden Adhäsionskräften mit Zwischenlagen oder Spreizmagneten entgegengewirkt. Die meist aus Kunststoff bestehenden Zwischenlagen werden als Abstandshalter zwischen zwei Sägeblattgrundkörpern positioniert. Dadurch wird das Speichervolumen im Vorlagemagazin verkleinert und die Handhabung der dort gelagerten Sägeblattgrundkörper wird erschwert.

Werden Spreizmagnete zur Vereinzelung der Sägeblattgrundkörper eingesetzt, so ist die Technik auf Sägeblattgrundkörper mit ausgeprägten ferromagnetischen Eigenschaften begrenzt und es hat sich gezeigt, dass diese Art der Vereinzelung nur begrenzt funktionstüchtig ist.

Nicht immer gelingt es den Spreizmagneten die Adhäsionskräfte zwischen zwei Sägeblattgrundkörpern so zu kompensieren, dass diese vereinzelt von einem Greiferarm aufgegriffen werden können.

Aus der DE 43 34 129 A1 ist weiterhin eine Vorrichtung zum Vereinzeln gestapelter, flacher, ebener, keramischer Körper bekannt, die auf einer verfahrbaren Auflageplatte gestapelt aufliegen. Der oberste Körper des Stapels wird so nahe an eine Saugeinrichtung verfahren, dass die aus einer ebenen Platte herausverfahrbaren Saugnäpfe den obersten Körper ansaugen und anheben können. Die aus der ebenen Platte herausverfahrbaren Saugnäpfe fahren mit dem angesaugten Körper so weit in die ebene Platte hinein zurück, bis der Körper an der ebenen Platte anliegt. Senkrecht zu dieser ebenen Platte ist eine Abstreifplatte positioniert, die je nach Größe der gestapelten Körper von der Saugeinrichtung beabstandet ist. Die ebene Platte mit der Saugeinrichtung, die horizontal ausgerichtet ist, ist derart auf die vertikal ausgerichtete Abstreifplatte abgestimmt, dass zwischen der ebenen Platte und der Abstreifplatte ein Spalt entsteht, der ungefähr auf die Höhe des zu vereinzelnden Körpers abgestellt ist. Sollen nun mehrere aneinander haftende Körper voneinander getrennt werden, so wird der oberst auf dem Stapel aufliegende Körper über die Saugeinrichtung angehoben, bis er an der Unterseite der Platte anliegt. Die Platte mit dem Körper wird anschließend in Richtung Abstreifplatte horizontal verschoben und dadurch, dass die Plattenunterseite mit dem Rand der Abstreifplatte ungefähr eine Spaltgröße bildet, die der Dikke des zu vereinzelnden Körpers entspricht, kann durch den geschaffenen Spalt nur ein Körper hindurchgeschoben werden. Am Körper möglicherweise noch anhaftende Körper werden bei diesem Bewegungsvorgang abgestreift. Ein auf dem Körperstapel aufliegender Körper kann somit vereinzelt werden. Die bekannte Vereinzelungsvorrichtung weist mit einer Auflageplatte, einer Abstreifplatte und einer Saugeinrichtung, die bei einem Vereinzelungsvorgang aufeinander abzustimmen sind, zahlreiche Merkmale auf. Weiterhin ist eine Blasdüse vorgesehen, die die Vereinzelung der Körper unterstützen soll.

Aufgabe der Erfindung ist deshalb, die Funktionssicherheit bei der Vereinzelung von Sägeblattgrundkörpern aus einem Vorlagemagazin zu erhöhen und den Vereinzelvorgang zu vereinfachen.

Gelöst wird diese Aufgabe durch ein Verfahren, bei dem ein an dem ersten Sägeblattgrundkörper anliegender zweiter Sägeblattgrundkörper noch von dem ersten Dorn gehalten wird, und in einem zweiten Schritt der erste Sägeblattgrundkörper mittels des Greiferarms mindestens so weit gegenüber dem zweiten Sägeblattgrundkörper radial zum ersten Dorn verfahren wird, bis der erste Sägeblattgrundkörper den ersten Dorn vollkommen freigibt.

Das erfindungsgemäße Verfahren hat damit den wesentlichen Vorteil, dass man einerseits auf zusätzliche Maßnahmen zur Vereinzelung der Sägeblattgrundkörper verzichten kann und andererseits nutzt das erfindungsgemäße Verfahren die Erkenntnis, dass die beim Aneinanderhaften von Sägeblattgrundkörpern parallel zu den Seitenflächen der Sägeblattgrundkörper wirkenden Kräfte kleiner sind als die zwischen den Sägeblattgrundkörpern auftretende Adhäsionskraft. Die Sägeblattgrundkörper lassen sich leicht gegeneinander verschieben, wenn der eine Sägeblattgrundkörper ausschließlich vom ersten Dorn und der andere Sägeblattgrundkörper ausschließlich vom Greiferarm gehalten wird.

Der erste Dorn weist am freien Ende eine ausgeprägte Kante auf, die beim Verschiebevorgang von zwei Sägeblattgrundkörpern nicht über die Ebene des Sägeblattgrundkörpers vorsteht, der ausschließlich von dem ersten Dorn gehalten wird.

In einem dritten Schritt kann es vorteilhaft sein, dass der Greiferarm zuerst den von ihm ergriffenen Sägeblattgrundkörper gegenüber dem daran angrenzenden Sägeblattgrundkörper nur so weit verschiebt, dass der vom Greiferarm ergriffene Sägeblattgrundkörper vollkommen ausserhalb des Eingriffes von dem ersten Dorn ist. Sind die zu vereinzelnden Sägeblattgrundkörper so weit gegeneinander verschoben, so kann der Greiferarm den oder die auf dem ersten Dorn befindlichen Sägeblattgrundkörper noch in eine Lage verschieben, die gewährleistet, dass bei einem horizontal ausgerichteten ersten Dorn kein Sägeblattgrundkörper von dem ersten Dorn zufällig herunterfallen kann.

Wird ein weiterer Sägeblattgrundkörper benötigt, so kann der Greiferarm so lange in axialer Richtung parallel zum ersten Dorn verfahren, bis er auf einen Sägeblattgrundkörper trifft. Diesen Sägeblattgrundkörper kann der Greiferarm aufgreifen, beispielsweise über Saugnäpfe oder magnetisch ausgestaltete Greiferarme, und den aufgegriffenen Sägeblattgrundkörper über das freie Dornende hinaus so weit verfahren, dass er den ergriffenen Sägeblattgrundkörper seitlich zu dem noch im Dorn befindlichen Sägeblattgrundkörper verfahren kann.

In einem weiteren Verfahrensschritt, nämlich in einem vierten Schritt positioniert der Greiferarm den von ihm ergriffenen Sägeblattgrundkörper auf der Welle und anschließend gibt der Greiferarm diesen auf der Welle positionierten Sägeblattgrundkörper frei, damit der Verlötvorgang eingeleitet werden kann.

Der erste Dorn ist in der Regel zylindrisch ausgebildet und kann sich zum freien Ende hin konisch verjüngen und anschließend wieder in einen zylindrischen Abschnitt übergehen. Ist der Durchmesser des zylindrischen Abschnitts kleiner als der zentrale Durchbruch am Sägeblattgrundkörper, so dient dieser zylindrische Abschnitt als Beladehilfe zum Beladen des Vorlagemagazins mit Sägeblattgrundkörpern.

Die im Zusammenhang mit dem erfindungsgemäßen Verfahren beschriebenen Dorne können auch als Profilstäbe mit einer beliebigen Querschnittsform ausgebildet sein. Es versteht sich, dass das im Zusammenhang mit einem Lötvorgang beschriebene erfindungsgemäße Vereinzelungsverfahren auch in Verbindung mit Prozessen anzuwenden ist, bei denen beispielsweise Sägeblattgrundkörper vermessen, geprüft, angelassen oder geschliffen werden. Unter Sägeblattgrundkörper sind auch Grundkörper zu verstehen, die zu Kreis- oder Rundmessern weiter bearbeitet werden können.

Soweit im Zusammenhang mit dem erfindungsgemäßen Verfahren beschrieben ist, dass der Greiferarm längs eines Dornes verfährt, ist es auch möglich, dass der Greiferarm ortsfest positioniert ist und der Dorn verfahren wird.

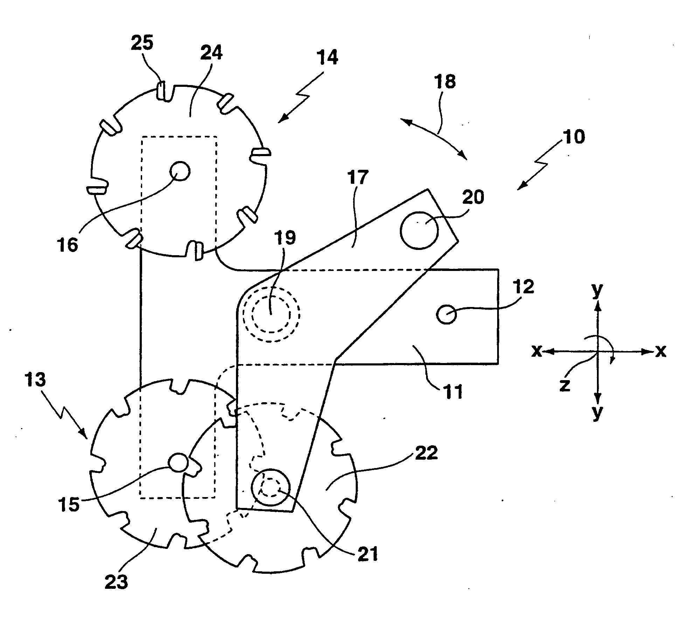

Weitere Vorteile ergeben sich aus der Beschreibung und der beigefügten Zeichnung. Ebenso können die vorstehend genannten und die noch weiter aufgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter.

Das erfindungsgemäße Verfahren wird anhand einer stark schematisierten Figur beschrieben.

In der Figur sind mit 10 Teile einer Anlötvorrichtung für Zähne an Sägeblattgrundkörpern gezeigt. An einer ortsfesten Halterung 11 ist eine Welle 12 einer Aufnahmevorrichtung ausgebildet. Die Welle 11 ist in xy-Richtung verfahrbar und um die z-Achse drehbar gelagert. An der ortsfesten Halterung 11 ist ein Vorlagemagazin 13 und ein Ablagemagazin 14 befestigt. Am vorlagemagazin 13 ist ein erster Dorn 15 für die Aufnahme von Sägeblattgrundkörpern ausgebildet und das Ablagemagazin 14 weist einen zweiten Dorn 16 auf, der mit Zähnen bestückte Sägeblattgrundkörper aufnehmen kann.

An der ortsfesten Halterung 11 ist ein Greiferarm 17 schwenkbar gelagert. Der Greiferarm 17 lässt sich in Pfeilrichtung 18 soweit verschwenken, dass er sowohl den ersten Dorn 15 wie auch den zweiten Dorn 16 erreichen kann. Der Greiferarm 17 ist um eine Drehachse 19 verschwenkbar.

An den freien Enden des Greiferarms 17 sind Greifereinrichtungen 20, 21 ausgebildet, die erste, zweite, dritte Sägeblattgrundkörper 22, 23, 24 aufgreifen und transportieren können. Die Greifereinrichtungen 20, 21 können Saugnäpfe, mechanische Finger oder magnetische Haltebacken sein.

Im Ablagemagazin 14 werden die mit Zähnen 25 bestückten Sägeblattgrundkörper 24 gelagert.

Soll nun ein Sägeblattgrundkörper 22 der Welle 12 zugeführt werden, so verschwenkt der Greiferarm 17 so weit, dass er im Vorlagemagazin 13 einen Sägeblattgrundkörper 22 aufgreifen kann. Hat der Greiferarm 17 mit seiner Greifeinrichtung 21 einen Sägeblattgrundkörper 22 ergriffen, so verfährt der Greiferarm 17 den Sägeblattgrundkörper 22 so lange parallel zum ersten Dorn 15, bis der Sägeblattgrundkörper 22 über das freie Ende des ersten Dorns 15 vorsteht.

Ist diese Stellung erreicht, so verfährt der Greiferarm 17 den Sägeblattgrundkörper 22 so weit radial gegenüber dem unmittelbar angrenzenden Sägeblattgrundkörper 23, bis der Sägeblattgrundkörper 22 nicht mehr in oder an den ersten Dorn 15 grenzt (in der Figur dargestellt). Ist diese Stellung des Greiferarms 17 mit dem ergriffenen Sägeblattgrundkörper 22 erreicht, so verfährt der Greiferarm 17 parallel zum ersten Dorn 15 so weit, bis die noch auf dem ersten Dorn 15 gelagerten Sägeblattgrundkörper 23 in einer Positionslage sind, die gewährleistet, dass diese Sägeblattgrundkörper nicht von dem ersten Dorn 15 herunterfallen können.

Sind die noch im Vorlagemagazin 13 gelagerten Sägeblattgrundkörper gesichert, verfährt der Greiferarm 17 weiter mit einer Verschwenkbewegung zur'Welle 12 und legt dort den Sägeblattgrundkörper 22 ab. Ist der Sägeblattgrundkörper 22 auf der Welle 12 positioniert, so kann mit dem Anlöten der Zähne 24 an den Sägeblattgrundkörper 22 begonnen werden. Sind alle Zähne 25 an den Sägeblattgrundkörper 22 angelötet, so greift der Greiferarm 17 erneut den Sägeblattgrundkörper 22 an der Welle 12 auf und transportiert diesen Sägeblattgrundkörper mit den angelöteten Zähnen 25 in das Ablagemagazin 14.

Bei einem Verfahren zur Vereinzelung von Sägeblattgrundkörpern 22, 23 aus einem Vorlagemagazin 13 greift ein Greiferarm 17 einen Sägeblattgrundkörper 22 auf und führt diesen Sägeblattgrundkörper 22 über den ersten Dorn 15 hinaus, so dass der Sägeblattgrundkörper 22 nicht mehr im Eingriff mit dem ersten Dorn 15 steht. Anschließend verfährt der Greiferarm 17 den aufgegriffenen Sägeblattgrundkörper 22 radial zum unmittelbar angrenzenden Sägeblattgrundkörper so weit, dass die weitere Vereinzelung unproblematisch ist oder so weit über den unmittelbar angrenzenden Sägeblattgrundkörper hinaus, bis der ergriffene Sägeblattgrundkörper 22 zum ersten Dorn 15 parallel in eine Richtung verfahren werden kann, in der er die noch auf dem ersten Dorn 15 gelagerten Sägeblattgrundkörper vom freien Ende des ersten Dorns 15 entfernt und die auf dem ersten Dorn 15 gelagerten Sägeblattgrundkörper in eine Position schiebt, in der sie sicher auf dem ersten Dorn 15 gelagert sind.

## Patentansprüche

1. Verfahren zur Vereinzelung von Sägeblattgrundkörpern (22, 23) aus einem Magazin, insbesondere einem Vorlagemagazin (13), für eine Welle .(12) einer Aufnahmevorrichtung, in der an den Sägeblattgrundkörper (22, 23) Zähne (24) angelötet werden, mit einem Greiferarm (17), der einen Sägeblattgrundkörper (22, 23) im Vorlagemagazin (13) aufgreift und den Sägeblattgrundkörper (22) zur Welle (12) transportiert und auf der Welle (12) ablegt, wobei die Sägeblattgrundkörper (22, 23) auf einem ersten Dorn (15) gestapelt sind, wobei der Greiferarm (17) über Greifereinrichtungen (21) den unmittelbar an die Greifereinrichtungen (21) angrenzenden Sägeblattgrundkörper (22, 23) ergreift, den Sägeblattgrundkörper (22, 23) in einem ersten Schritt soweit auf dem ersten Dorn (15) verfährt, bis ein erster Sägeblattgrundkörper (22) über den ersten Dorn (15) vorsteht,
**dadurch gekennzeichnet,**
**dass** ein an dem ersten Sägeblattgrundkörper (22) anliegender zweiter Sägeblattgrundkörper (23) noch von dem ersten Dorn (15) gehalten wird, und in einem zweiten Schritt der erste Sägeblattgrundkörper (22) mittels des Greiferarms (17) mindestens soweit gegenüber dem zweiten Sägeblattgrundkörper (23) radial zum ersten Dorn (15) verfahren wird, bis der erste Sägeblattgrundkörper (22) den ersten Dorn (15) vollkommen frei gibt.

2. Verfahren nach Anspruch 1, **dadurch gekennzeichnet, dass** nach dem zweiten Schritt der Greiferarm (17) in einem dritten Schritt mindestens soweit längs des ersten Dorns (15) verfahren wird, bis der erste Sägeblattgrundkörper (22), der ausschließlich vom Greiferarm (17) gehalten wird, innerhalb der axialen Erstreckung des ersten Dorns (15) und vom freien Ende des ersten Dorns (15) entfernt positioniert ist.

3. Verfahren nach einem der Ansprüche 1 oder 2, **dadurch gekennzeichnet, dass** in einem vierten Schritt der Greiferarm (17) den ersten Sägeblattgrundkörper (22) auf der Welle (12) positioniert und anschließend über die Greifereinrichtungen (21) den ersten Sägeblattgrundkörper (22) freigibt.

## Claims

1. Method for separating saw blade basic bodies (22, 23) from a magazine, in particular a supply magazine (13), for a shaft (12) of a receiving device in which teeth (24) are soldered to the saw blade basic body (22, 23), comprising a gripper arm (17) which grips a saw blade basic body (22, 23) in the supply magazine (13) and transports the saw blade basic body (22) to the shaft (12) and deposits it on the shaft (12), wherein the saw blade basic bodies (22, 23) are piled on a first mandrel (15), wherein the gripper arm (17) grips, via gripper means (21), the saw blade basic body (22, 23) directly neighbouring the gripper means, displaces the saw blade basic body (22, 23) in a first step on the first mandrel (15) until a first saw blade basic body (22) projects past the first mandrel (15), **characterized in that** a second saw blade basic body (23) which abuts the first saw blade basic body (22) is held by the first mandrel (15) and in a second step, the first saw blade basic body (22) is radially displaced to the first mandrel (15) relative to the second saw blade basic body (23) through the gripper arm (17) at least until the first saw blade basic body (22) completely releases the first mandrel (15).

2. Method according to claim 1, **characterized in that** after the second step, the gripper arm (17) is displaced in a third step along the first mandrel (15) at least until the first saw blade basic body (22) which is held exclusively by the gripper arm (17) is positioned within the axial extension of the first mandrel (15) away from the free end of the first mandrel (15).

3. Method according to any one of the claims 1 or 2, **characterized in that** in a fourth step, the gripper arm (17) positions the first saw blade basic body (22) on the shaft (12) and subsequently releases the first saw blade basic body (22) via the gripper means (21).

## Revendications

1. Procédé pour retirer un par un des corps de base de lame de scie (22, 23) hors d'un magasin, en particulier d'un magasin de distribution (13), pour un arbre (12) d'un dispositif de réception dans lequel des dents (24) sont soudées sur le corps de base de lame de scie (22, 23), comportant un bras de préhension (17) qui saisit un corps de base de lame de scie (22, 23) dans le magasin de distribution (13) et qui transporte le corps de base de lame de scie (22) vers l'arbre (12) et le pose sur l'arbre (12), les corps de base de lame de scie (22, 23) étant empilés sur un premier mandrin (15), le bras de préhension (17) saisissant via des dispositifs de préhension (21) le corps de base de lame de scie (22, 23) directement adjacent aux dispositifs de préhension (21), déplaçant dans une première étape le corps de base de lame de scie (22, 23) sur le premier mandrin (15) aussi loin qu'un premier corps de base de lame de scie (22) dépasse au-delà du premier mandrin (15), **caractérisé en ce qu'**un deuxième corps de base de lame de scie (23) en appui sur le premier corps de base de lame de scie (22) est encore retenu par le premier mandrin (15) et **en ce que** dans une deuxième étape, le premier corps de base de lame de scie (22) est déplacé au moyen du bras de préhension (17) par rapport au deuxième corps de base de lame de scie (23), au moins aussi loin radialement vers le premier mandrin (15) que le premier corps de base de lame de scie (22) libère totalement le premier mandrin (15).

2. Procédé selon la revendication 1, **caractérisé en ce qu'**après la deuxième étape, le bras de préhension (17) est déplacé au cours d'une troisième étape au moins le long du premier mandrin (15) aussi loin que le premier corps de base de lame de scie (22), qui est maintenu exclusivement par le bras de préhension (17), soit positionné à l'intérieur de l'extension axiale du premier mandrin (15) et en éloignement de l'extrémité libre du premier mandrin (15).

3. Procédé selon l'une ou l'autre des revendications 1 et 2, **caractérisé en ce qu'**au cours d'une quatrième étape, le bras de préhension (17) positionne le premier corps de base de lame de scie (22) sur l'arbre (12) et libère ensuite le premier corps de base de lame de scie (22) via les dispositifs de préhension (21).
